# EUROPÄISCHE PATENTSCHRIFT

(11) **EP 2 309 242 B1**
(45) Veröffentlichungstag und Bekanntmachung des Hinweises auf die Patenterteilung: **13.11.2013**
(21) Anmeldenummer: 10180968.9
(22) Anmeldetag: 28.09.2010
(51) Int. Cl.: G01M 17/007, G01M 99/00

(54) **Testvorrichtung zum Testen einer Airbagbaugruppe**
Testing device for testing an airbag assembly
Dispositif de test destiné à tester un composant d'airbag

(30) Priorität: 07.10.2009 DE 102009045451
(43) Veröffentlichungstag der Anmeldung: 13.04.2011
(73) Patentinhaber: Takata AG, 63743 Aschaffenburg (DE)
(72) Erfinder: Hofmann, Heiko, 13086, Berlin (DE); Puchert, Christian, 10555, Berlin (DE)
(74) Vertreter: Baumgärtel, Gunnar

(56) Entgegenhaltungen:
- DE-A1- 10 109 375
- DE-A1- 19 750 157
- DE-U1- 20 107 590
- KR-A- 20080 050 779
- US-A1- 2005 065 757

## Beschreibung

Die Erfindung betrifft eine Testvorrichtung zum Testen einer dem Schutz eines Fahrzeuginsassen dienenden Airbagbaugruppe nach dem Oberbegriff des Anspruchs 1.

Eine derartige Testvorrichtung (Versuchsaufbau) umfasst eine erste Aufnahme zum Aufnehmen einer zu testenden Airbagbaugruppe, welche einen zum Schutz eines Fahrzeuginsassen aufblasbaren Gassack aufweist, sowie eine zweite Aufnahme zum Aufnehmen einer Testpuppe (Dummy), die den zu schützenden Fahrzeuginsassen repräsentiert und auf die der Gassack beim Aufblasen einwirkt, sowie weiterhin Mittel zum Positionieren der Testpuppe an der zweiten Aufnahme, um die Testpuppe in eine bestimmte Position bringen zu können, bezüglich der die Einwirkung des Gassackes untersucht werden soll.

Die Testvorrichtung ermöglicht die Prüfung der Funktion einer Airbagbaugruppe außerhalb einer Fahrzeugumgebung und gestattet insbesondere vergleichsweise kostengünstig eine Vielzahl von Prüfungen unter unterschiedlichen Bedingungen, insbesondere bei unterschiedlichen Positionierungen der Testpuppe bezüglich der Airbagbaugruppe, vorzunehmen. Hierdurch können die Schutzwirkung der Airbagbaugruppe aber auch mögliche Gefährdungen eines Fahrzeuginsassen durch einen sich beim Aufblasen entfaltenden Gassack für unterschiedliche Positionen des Fahrzeuginsassen geprüft werden, indem die den Insassen repräsentierende Testpuppe, insbesondere die unterschiedlichen Komponenten der Testpuppe, wie zum Beispiel Oberkörper, Kopf, obere Extremitäten und untere Extremitäten, jeweils gezielt so ausgerichtet werden, dass eine bestimmte zu prüfende Insassenposition nachgestellt wird. Die Testpuppe ist also an der Testvorrichtung (Versuchsaufbau) jeweils in eine bestimmte Position zu bringen und in dieser Position zu fixieren, bevor die Airbagbaugruppe zum Aufblasen des zugeordneten Gassackes aktiviert wird.

Hierdurch lassen sich verlässliche Aussagen über die Funktion der Airbagbaugruppe und mögliche Risiken nicht nur im Normalfall, entsprechend einem in bestimmungsgemäßer Position auf einem Fahrzeugsitz sitzenden Fahrzeuginsassen, gewinnen, sondern darüber hinaus auch im Fall eines Fahrzeuginsassen mit einer von der Normalposition abweichenden Sitzposition (oop: "out of position").

Um bei derartigen Tests auch die unterschiedliche Konstitution möglicher Fahrzeuginsassen berücksichtigen zu können, ist eine Testvorrichtung regelmäßig mit Testpuppen unterschiedlicher Klassen ausrüstbar, wobei die Testpuppen einer Klasse jeweils Fahrzeuginsassen in einem bestimmten Gewichts- und Größenbereich repräsentieren.

Eine gattungsgemäße Testvorrichtung ist aus der KR 2008 0050779 A bekannt.

Bei einer aus der DE 201 07 590 U1 bekannten Testvorrichtung wird eine Testpuppe auf eine die Sitzfläche eines Fahrzeugsitzes repräsentierende Aufnahmevorrichtung gesetzt sowie weiterhin mit ihren unteren Extremitäten an einem Bodenbereich der Testvorrichtung abgestützt. Zur Einstellung einer bestimmten Position der Testpuppe dienen unter anderem Stützelemente, die am Körper der Testpuppe angreifen, um diese auszurichten.

Wichtig ist beim Positionieren einer Testpuppe an der Testvorrichtung, dass eine genaue und reproduzierbare Einstellung der Position der Testgruppe erfolgt, damit die bei einer Durchführung von Versuchen mit gleicher Konfiguration gewonnenen Ergebnisse zuverlässig verwertbar und untereinander vergleichbar sind. Die hierfür erforderlichen Einstell- und Justierarbeiten an einer Testpuppe sind mit erheblichem (zeitlichen) Aufwand verbunden, da beispielsweise eine Einstellung der Lage der unteren Extremitäten einer Testpuppe Rückwirkung auf die Position des Beckenbereiches der Testpuppe haben kann und umgekehrt. Dies bedingt einen entsprechend komplizierten iterativen Einstellprozess.

Aus der US 2005/0065757 A1 ist eine Testvorrichtung bekannt, mit der eine Testpuppe gegen ein Kollisionselement in Form einer Armaturentafel geschwenkt werden kann.

Und die DE 201 07 590 U1 beschreibt eine Vorrichtung zur Positionierung einer Testpuppe in einem Versuchsaufbau für aufblasbare Schutzkissen in Fahrzeugen.

Der Erfindung liegt das Problem zugrunde, eine Testvorrichtung der eingangs genannten Art weiter zu verbessern, insbesondere die Einstellung einer bestimmten Position einer Testpuppe zu vereinfachen, wobei das Zusammenwirken der Testpuppe mit einem hierauf einwirkenden Gassack möglichst realitätsnah präsentiert werden soll.

Dieses Problem wird erfindungsgemäß durch die Schaffung einer Testvorrichtung mit den Merkmalen des Patentanspruchs 1 gelöst.

Danach umfassen die Positioniermittel der Testvorrichtung eine Fixiereinrichtung, mit der die Testpuppe in einem Teilbereich derart an der Testvorrichtung fixierbar ist, dass die Testpuppe bei Einwirkung des zugeordneten, sich beim Aufblasen entfaltenden Gassackes in diesem Teilbereich (z.B. in einem das Becken eines Fahrzeuginsassen repräsentierenden Bereich) entlang mindestens einer Raumrichtung fixiert bleibt, also sich in dieser Raumrichtung (abgesehen von möglichen Auslenkungen entfernt vom fixierten Teilbereich angeordneter Teile der Testpuppe, wie z.B. oberer Extremitäten) auch unter Einwirkung des Gassackes nicht bewegt. Es erfolgt also nach einer Ausführungsform z.B. keine Bewegung des Beckenbereiches der Testpuppe unter Einwirkung des Gassackes.

Dabei definieren die Positioniermittel eine Schwenkachse, bezüglich der die Testpuppe schwenkbar gelagert ist, so dass bei einer Einwirkung des (mit Gas gefüllten, sich entfaltenden) Gassackes auf den Brust- und/oder Kopfbereich der Testpuppe letzterer eine Schwenkbewegung weg von der Airbagbaugruppe ausführen kann.

Die erfindungsgemäße Lösung beruht auf der Erkenntnis, dass beim Test einer Airbagbaugruppe die (durch den sich entfaltenden Gassack verursachte) Hauptbelastung einer einen Fahrzeuginsassen repräsentierenden Testpuppe innerhalb von etwa 50 ms nach Aktivierung der Airbagbaugruppe erfolgt, also in einer Zeitspanne, in der sich einige Bereiche der Testpuppe trotz der Einwirkung des sich entfaltenden Gassackes noch gar nicht substantiell bewegen. Zu diesen Bereichen gehört beispielsweise der den Beckenbereich eines Fahrzeuginsassen repräsentierende Teilbereich einer Testpuppe.

Dieser überraschende Effekt kann ausgenutzt werden, um die Testpuppe für die Versuchsdurchführung und damit auch beim Positionieren an der Testvorrichtung in einem Teilbereich (z.B. einem Beckenbereich) so festzulegen, dass die Testpuppe hierdurch zumindest in diesem Teilbereich entlang wenigstens einer Raumrichtung fixiert ist. Hierdurch sind die Freiheitsgrade für das weitere Ausrichten der Testpuppe erheblich reduziert, so dass das Einstellen und Justieren der Testpuppe mit erheblich geringerem (zeitlichen) Aufwand erfolgen kann. Dies ist z.B. dann vorteilhaft, wenn mehrere Versuche mit identischer Positionierung der Testpuppe hintereinander durchgeführt werden sollen.

Dabei kann vorgesehen sein, dass die Testpuppe im fixierten Zustand außerhalb (insbesondere unterhalb) des fixierten Teilbereiches keine (zusätzlichen) Stützstellen aufweist, über die sie sich an der Testvorrichtung abstützt, während sie sich unter Einwirkung des Gassackes bewegt. Dies schließt aber nicht das Vorhandensein eines weiteren Stützelementes aus, um die Testpuppe vor Einwirkung des Gassackes in einer definierten Lage zu halten. Vielmehr geht es hier um die Abwesenheit einer Abstützung, die (auch) dann wirksam ist, während der Gassack auf die Testpuppe einwirkt und diese dementsprechend bewegt wird. (Dies schließt ferner nicht das Vorhandensein einer Abfangeinrichtung, z.B. nach Art einer Rückenlehne, aus, die die Testpuppe nach Einwirkung des Gassackes auffängt.) Insbesondere soll kein andauernder Kontakt der Testpuppe während der Einwirkung des Gassackes mit einer unterhalb des Oberkörpers der Testpuppe vorgesehenen Stützfläche, z.B. nach Art der Sitzfläche eines Kraftfahrzeugsitzes, bestehen.

Unter der Charakterisierung, dass die Testpuppe im fixierten Zustand unterhalb des fixierten Teilbereiches keine Stützstellen aufweist, wird dabei verstanden, dass solche Bereiche der Testpuppe, die bei bestimmungsgemäßer Ausrichtung der Testpuppe, so dass diese eine (mögliche) Sitzposition in einem Kraftfahrzeug repräsentiert, (entlang der Richtung der Gravitationskraft) unterhalb des fixierten Teilbereiches der Testpuppe angeordnet sind, nicht (fortdauernd) abgestützt werden.

Die Fixierung der Testpuppe kann insbesondere im Bereich des so genannten H-Punktes erfolgen, der im Wesentlichen das Hüftgelenk eines Fahrzeuginsassen repräsentiert.

Die Fixierung der Testpuppe in einem Teilbereich, insbesondere einem das Becken eines Fahrzeuginsassen repräsentierenden Bereich, kann derart erfolgen, dass hierdurch eine Fixierebene definiert wird, senkrecht zu der der besagte Teilbereich der Testpuppe im fixierten Zustand nicht verschiebbar ist. In diesem Fall ist also die erfindungsgemäße örtliche Fixierung der Testpuppe in einem Teilbereich dadurch realisiert, dass sich der besagte Teilbereich nicht senkrecht zu einer durch die Ausgestaltung der Fixiereinrichtung vorgegebenen Ebene verschieben lässt.

Insbesondere wenn mittels der Testpuppe eine typische Sitzsituation eines Insassen in einem Kraftfahrzeug nachgestellt werden soll, bei der der Insasse so ausgerichtet ist, dass er in seiner bestimmungsgemäßen Sitzposition in Fahrtrichtung blickt, und wenn es um den Test eines Frontairbags (Fahrer-, Beifahrer- oder Knieairbag) geht, kann die besagte Ebene durch die in Fahrtrichtung weisende Fahrzeuglängsachse sowie die senkrecht zur Fahrzeuglängsachse auf das Fahrzeugdach weisende vertikale Fahrzeugachse aufgespannt sein (also insbesondere parallel hierzu verlaufen). In diesem Fall ist die Testpuppe - bezogen auf die Achsen eines Kraftfahrzeugs - entlang der horizontalen Fahrzeugquerachse (bzw. parallel zu dieser) fixiert, welche in einem Kraftfahrzeug von einer Seitentür zur gegenüberliegenden Seitentür weist, also entlang jener Achse nach dem Fixieren nicht verschiebbar.

Wenn die Testvorrichtung zum Testen eines bestimmungsgemäß seitlich an einem Kraftfahrzeug anzuordnenden Airbagmodules, zum Beispiel eines Seiten- bzw. Kopfairbags, vorgesehen ist, dann wird die genannte Ebene (Fixierebene) beispielsweise durch die quer zur Fahrtrichtung verlaufende horizontale Fahrzeugquerachse sowie die vertikale Fahrzeugachse aufgespannt.

Andererseits ist die Testpuppe unter der Einwirkung des zu testenden Airbags entlang mindestens einer Raumrichtung beweglich, z.B. - bezogen auf die Achsen eines Kraftfahrzeugs - entlang der Fahrzeuglängsachse und/oder der vertikalen Fahrzeugachse. Hierunter fällt insbesondere eine Schwenkbewegung in der durch die Fahrzeuglängsachse und der vertikalen Fahrzeugachse aufgespannten Ebene, die ja jeweils eine Bewegungskomponente in Fahrzeuglängsrichtung und eine Bewegungskomponente entlang der vertikalen Fahrzeugachse aufweist.

Gemäß einer mit einfachen Mitteln realisierbaren Ausführungsform der Erfindung ist die Testpuppe lediglich in einem Teilbereich fixiert und im Übrigen zumindest in einer Anfangsphase der Bewegung unter der Einwirkung eines zu testenden Gassacks frei bewegbar. Dass heißt, die Bewegungsfreiheitsgrade der Testpuppe werden zunächst lediglich durch die Fixierung in dem einen Teilbereich begrenzt. Es gibt dann keine weiteren Stütz- oder Fixierungspunkte, die unmittelbar nach einer ersten Einwirkung des Gassacks die Bewegungsmöglichkeit der Testpuppe einschränken.

Im Hinblick auf spätere Bewegungsphasen der Testpuppe können an der Testvorrichtung Komponenten vorgesehen sein, die übliche Bestandteile des Innenraums eines Kraftfahrzeugs, wie z.B. ein Lenkrad, eine Rückenlehne, eine Kopfstütze und dergleichen repräsentieren und mit denen die Testpuppe aufgrund einer durch den einwirkenden Gassack induzierten Bewegung schließlich in Kontakt gerät.

Gemäß einer Ausführungsform der Erfindung ist die Testpuppe schwenkbar gelagert, und zwar insbesondere bezüglich einer Schwenkachse verschwenkbar. Die Testpuppe kann hierbei einerseits unmittelbar auf der Schwenkachse selbst gelagert sein oder andererseits über ein Verbindungselement, insbesondere in Form eines Hebels, mit der Schwenkachse verbunden sein. Im letztgenannten Fall liegt eine bezüglich der Schwenkachse exzentrische Lagerung der Testpuppe vor.

Indem die Testpuppe derart relativ zu einer Schwenkachse fixiert wird, dass Sie zwar verschwenkbar, nicht aber entlang der Schwenkachse verschiebbar ist, bildet eine Schwenkbewegung bezüglich jener Schwenkachse den einzigen möglichen Bewegungsfreiheitsgrad der Testpuppe. Eine derart (mittels eines Drehgelenkes) gelagerte und fixierte Testpuppe kann besonders einfach in eine jeweilige bestimmungsgemäße Ausgangsposition für einen anstehenden Versuch gebracht werden, indem die Testpuppe durch eine Schwenkbewegung in eine jeweils gewünschte Position überführt wird.

Je nachdem wie die Testpuppe durch Verschwenken räumlich ausgerichtet wird, lassen sich unterschiedliche Abstände von und Neigungen bezüglich der zu testenden Airbagbaugruppe einstellen; hierzu ist die Testpuppe lediglich in eine bestimmte, vorgebbare Schwenkposition zu bringen. Dies erleichtert insbesondere auch mehrfache Versuche unter identischen Testbedingungen. Letztere sind dadurch herstellbar, dass die Testpuppe jeweils mit einer bestimmten (vorgegebenen) räumlichen Orientierung (also einem bestimmten Schwenkwinkel) bezüglich der Schwenkachse ausgerichtet wird.

Dabei kann gemäß einer Weiterbildung der Erfindung vorgesehen sein, dass die Testpuppe in einem Vorjustageprozess - durch Verschieben entlang der Erstreckungsrichtung der Schwenkachse - entlang der Schwenkachse in unterschiedliche Positionen bringbar ist. Sobald aber die Testpuppe einmal in einer bestimmten Position in Richtung der Schwenkachse fixiert worden ist, bleibt diese Position auch bei der nachfolgenden Einwirkung eines Gassackes im Rahmen einer Versuchsdurchführung erhalten, so dass diese eine Positionierung der Testpuppe in Richtung der Schwenkachse für eine Vielzahl nacheinander durchgeführter Versuche genutzt werden kann, um definierte (vergleichbare) Ausgangsbedingungen zu schaffen.

Zur Fixierung der Testpuppe in einer bestimmten Position entlang der Schwenkachse (Sicherung gegen Verschieben) können beliebige Fixiermittel, wie beispielsweise Klemmelemente, Rastelemente, Sicherungsschrauben und dergleichen, vorgesehen sein.

Um vorgeschriebene Versuchsbedingungen hinsichtlich der Belastung der Testpuppe unter Einwirkung eines sich beim Aufblasen entfaltenden Gassackes definiert einzustellen, können weiterhin Widerstandsmittel vorgesehen sein, die einer Schwenkbewegung der Testpuppe entgegenwirken. Die Widerstandsmittel können beispielsweise durch ein Gegengewicht, mindestens ein Reibelement oder ein Klemmelement gebildet werden. Allgemein handelt es sich um Mittel, mit denen ein der Schwenkbewegung entgegenwirkendes Moment so aufgebracht wird, dass dieses Moment durch den sich beim Testen entfaltenden und auf die Testpuppe einwirkenden Gassack überwindbar ist, damit unter Einwirkung des Gassackes eine Bewegung der Testpuppe zugelassen wird.

Indem das Moment, mit dem die Widerstandsmittel einer Schwenkbewegung der Testpuppe entgegenwirken, veränderbar (variabel einstellbar) ist, können unterschiedliche Insassenbelastungen bei Einwirkung eines sich entfaltenden Gassackes simuliert werden. Ferner können so Trägheitsmomente der unteren Extremitäten nachgebildet werden, die bei einer Versuchsdurchführung mit einer vollständig dem menschlichen Körper entsprechenden Testpuppe aufträten. Je größer (stärker) das Moment ist, mit dem einer Schwenkbewegung entgegengewirkt wird, desto größer ist die Belastung der Testpuppe unter einer Einwirkung des Gassackes.

Gemäß einer Ausführungsform der Erfindung weist die Testpuppe im fixierten Zustand unterhalb ihres fixierten Teilbereiches keine (weiteren) Stützstellen auf, über die sie sich an der Testvorrichtung abstützt.

Nach einer anderen Ausführungsform der Erfindung stützt sich die Testpuppe außerhalb (z.B. unterhalb) ihres fixierten Teilbereiches an einem zusätzlichen Stützelement der Testvorrichtung ab, um die Testpuppe vor Einwirkung des Gassackes in einer definierten Lage zu halten. Das besagte Stützelement kann einstellbar ausgebildet sein, um unterschiedliche Ausgangslagen der Testpuppe relativ zu der zu testenden Airbagvorrichtung vorgeben zu können.

Um mittels der Testpuppe die Belastung eines Fahrzeuginsassen unter der Einwirkung eines Gassackes möglichst wirklichkeitsgetreu nachbilden zu können, weist die Testpuppe zumindest Bereiche auf, die die Brust, das Becken und den Kopf eines Fahrzeuginsassen repräsentieren, sowie weiterhin obere Extremitäten (Arme und Hände einschließlich Gelenken).

Die erfindungsgemäße Testvorrichtung eignet sich insbesondere zum Testen einer Airbagbaugruppe, deren Gassack bestimmungsgemäß auf den Oberkörper, also insbesondere Becken, Brust und/oder Kopf, eines Fahrzeuginsassen einwirken soll, um diesen in einem Crash-Fall zu schützen. D. h., es geht um das Testen von Airbagmodulen, deren Gassack in einem Crash-Fall den Oberkörper eines Fahrzeuginsassen zurückhält und somit ein Schutzkissen hierfür bildet. Dementsprechend ist die Testvorrichtung insbesondere derart ausgebildet, dass bei bestimmungsgemäßer Anordnung der Airbagbaugruppe an der ersten Aufnahme der Testvorrichtung und bestimmungsgemäßer Anordnung der Testpuppe an der zweiten Aufnahme der Testvorrichtung der Gassack beim Aufblasen und Entfalten auf solche Bereiche der Testpuppe einwirkt, die den Oberkörper eines Fahrzeuginsassen repräsentieren.

In diesem Fall kann die Testpuppe der Einfachheit halber so ausgebildet werden, dass sie keine unteren Extremitäten, also keine die Beine eines Fahrzeuginsassen repräsentierenden Bereiche, aufweist. Dies erleichtert das genaue und vor allem reproduzierbare Positionieren der Testpuppe erheblich.

Die erste Aufnahme kann vorgesehen sein zur Aufnahme einer Funktionskomponente aus dem Frontbereich eines Kraftfahrzeugs einschließlich. Airbagmodul, wie z. B. eines Lenkrades, an dem eine zu testende Fahrer-Airbagbaugruppe angeordnet ist, oder eines Teiles einer Armaturentafel, hinter der eine zu testende Beifahrer-Airbagbaugruppe angeordnet ist.

Die zweite Aufnahme kann wiederum so ausgestaltet werden, dass bei bestimmungsgemäßer Anordnung der Testpuppe an jener Aufnahme ein auf einem Fahrzeugsitz sitzender Fahrzeuginsasse nachgebildet wird. Hierzu kann die Testvorrichtung weiterhin eine Abfangvorrichtung aufweisen, die die Rückenlehne eines Fahrzeugsitzes repräsentiert und mit der eine sich unter Einwirkung des Gassackes bewegende Testpuppe rückseitig abfangbar ist.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Darstellung einer Testvorrichtung zum Testen einer Airbagbaugruppe, mit einer Testpuppe;
- Fig. 2: eine schematische Darstellung einer zweiten Ausführungsform einer Testvorrichtung zum Testen einer Airbagbaugruppe, mit einer Testpuppe;
- Fig. 3: eine schematische Darstellung einer dritten Ausführungsform einer Testvorrichtung zum Testen einer Airbagbaugruppe, mit einer Testpuppe.

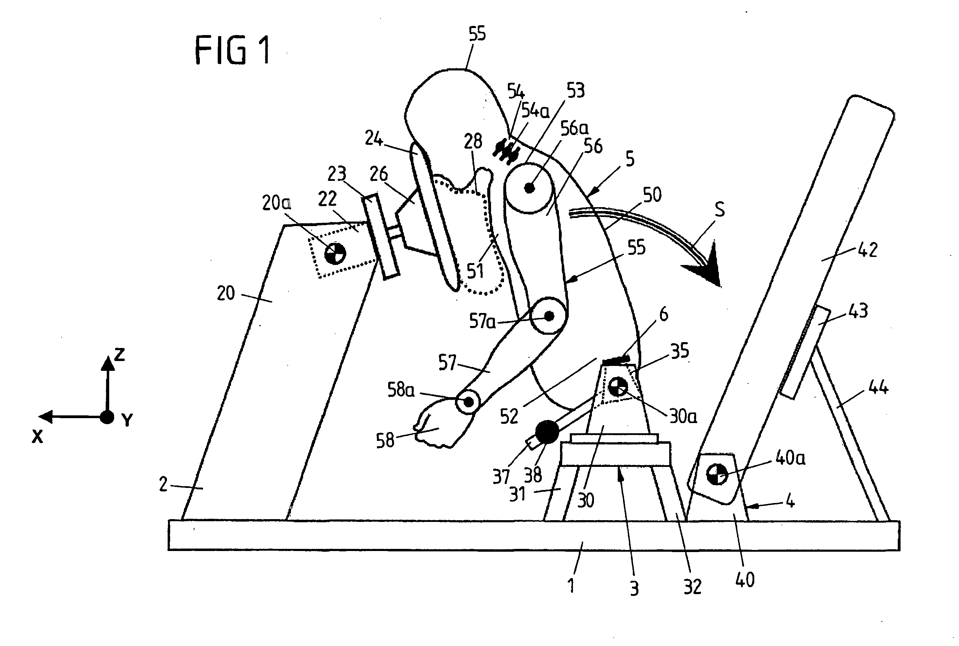

Figur 1 zeigt eine Testvorrichtung zum Testen einer Airbagbaugruppe 26, die zum Schutz eines Fahrzeuginsassen in einem Kraftfahrzeug ausgebildet und vorgesehen ist. Im Ausführungsbeispiel handelt es sich um ein Front-Airbagmodul in Form eines FahrerAirbagmodules, das an einem Fahrzeuglenkrad 24 angeordnet wird. Dementsprechend ist die Testvorrichtung so ausgebildet, dass hiermit - unter Verwendung einer sogenannten Testpuppe 5 (Testdummy) - eine typische Situation eines Fahrzeuginsassen innerhalb eines Kraftfahrzeugs nachgestellt werden kann.

Bei einem solchen Aufbau können insbesondere die Koordinaten des in Figur 1 zugrunde gelegten Koordinatensystems mit den gebräuchlichen Koordinaten eines Kraftfahrzeugs identifiziert werden, indem die x-Achse als Fahrzeuglängsachse, die γ-Achse als horizontale Fahrzeugquerachse und die z-Achse als vertikale Fahrzeugachse bezeichnet werden. In einem Kraftfahrzeug weist die Fahrzeuglängsachse x in Fahrtrichtung, die horizontale Fahrzeugquerachse y von einer Seitentür zur gegenüberliegenden Seitentür und die vertikale Fahrzeugachse vom Fahrzeugboden in Richtung auf das Fahrzeugdach, wobei alle drei Achsen x, y, z senkrecht aufeinander stehen.

Die Testvorrichtung umfasst eine Basis 1, welche die unterschiedlichen Komponenten der Testvorrichtung trägt. Im Ausführungsbeispiel ist die Basis 1 als ein einteiliger Boden der Testvorrichtung dargestellt. Die Basis 1 kann aber ebenso auch mehrteilig ausgeführt sein.

Die Basis 1 trägt im Ausführungsbeispiel der Figur 1 drei Baueinheiten 2, 3, 4, von denen die erste Baueinheit 2 eine Aufnahme für die zu testende Airbagbaugruppe 26 bildet, die zweite Baugruppe 3 eine Aufnahme für eine Testpuppe 5 bildet und die dritte Baueinheit 4 eine Aufnahme für eine Abfangeinrichtung 42 bildet, die die Rückenlehne eines Fahrzeugsitzes repräsentiert.

Die erste Aufnahme 2 weist eine von der Basis 1 abstehende Stütze 20 auf, an der ein Lenkradhalter 23 einstellbar angebracht ist, genauer mittels eines Gelenkes 20a gelagert ist. Hierzu ist der Lenkradhalter 23 über ein Verbindungselement 22 in Form eines Hebels schwenkbar an jenem Gelenk 20a angelenkt. Der Lenkradhalter 23 trägt ein Kraftfahrzeuglenkrad 24, an dem eine Airbagbaugruppe 26, hier in Form eines Fahrerairbagmodules, angeordnet ist, die insbesondere einen sich zum Schutz eines Fahrzeuginsassen aufblasbaren Gassack 28 aufweist. Weitere, nicht dargestellte Komponenten der Airbagbaugruppe 26 sind z.B. eine Aufblaseinrichtung zum Befüllen des Gassackes 28 mit Gas sowie gegebenenfalls ein Gehäuse, in dem der Gassack 28 vor dem Aufblasen verstaut ist.

Die zweite Aufnahme 3 umfasst einen Lagerbock 30, der im Ausführungsbeispiel über Stützstreben 31, 32 mit der Basis 1 verbunden ist und an dem in weiter unten noch näher zu beschreibender Weise die Testpuppe 5 angeordnet ist.

Die Testpuppe 5 repräsentiert einen Fahrzeuginsassen und weist als Hauptbestandteile einen Oberkörper 50 und zwei obere Extremitäten 55 auf, von denen in Figur 1 nur die eine (vordere) erkennbar ist. Der Oberkörper 50 der Testpuppe 5 repräsentiert in einem ersten Teilbereich 51 den Brustbereich und in einem zweiten Teilbereich 52 den Beckenbereich eines Fahrzeuginsassen. An den Brustbereich 51 schließt nach oben hin ein Schulterbereich 53 an, der über einen Nackenbereich 54 in einen Kopfbereich 55 der Testpuppe 5 übergeht. Der Kopfbereich 55 kann dabei im Nackenbereich 54 mittels Verbindungsgliedern 54a gelenkig mit dem Oberkörper 50 verbunden sein. Die Verbindungsglieder 54a repräsentieren den oberen Halswirbelsäulenbereich einer Wirbelsäulennachbildung der Testpuppe 5, welche sich entsprechend dem menschlichen Körper entlang des hinteren Bereiches des Oberkörpers 50 der Testpuppe 5 erstreckt.

Obere Extremitäten 55 der Testpuppe 5 sind beidseits an je einem Schulterbereich 53 angeordnet und umfassen jeweils einen Oberarmbereich 56, der über ein erstes Gelenk 56a an einem zugeordneten Schulterbereich 53 angelenkt ist, einen Unterarmbereich 57, der über ein zweites Gelenk 57a am jeweils zugehörigen Oberarmbereich 56 angelenkt ist, und einen Handbereich 58, der über ein drittes Gelenk 58a am jeweiligen Unterarmbereich 57 angelenkt ist.

Somit repräsentiert die in Figur 1 gezeigte Testpuppe den Oberkörper eines Fahrzeuginsassen einschließlich Kopf und oberer Extremitäten (Arme); sie weist im Ausführungsbeispiel jedoch keine die unteren Extremitäten (Beine) eines Fahrzeuginsassen repräsentierenden Bereiche auf.

Die dritte Aufnahme 4 der Testvorrichtung bildet einen Lagerbock 40, an dem eine Abfangeinrichtung 42 über ein Gelenk 40a schwenkbar angelenkt ist, die die Rückenlehne eines Fahrzeugsitzes repräsentiert und die entsprechend einer Rückenlehne (durch Verschwenken) in unterschiedliche Neigungspositionen bringbar ist. In einer jeweiligen Neigungsposition wird die Abfangeinrichtung 42 durch ein von einer Stütze 44 abgestütztes Halteelement 43 gesichert.

Eine derartige Testvorrichtung definiert - nach Anordnung einerseits der Airbagbaugruppe 26 und andererseits der Testpuppe 5 an der jeweils zugeordneten Aufnahme 2, 3 - einen Versuchsaufbau, mit dem sowohl die Schutzwirkung als auch mögliche Gefährdungswirkungen eines Gassackes 28 der Airbagbaugruppe 26 durch Einwirkung auf die Testpuppe 5 überprüfbar sind. Hierzu wird die Testpuppe 5 - in einer nachfolgend noch zu erläuternden Art und Weise - in einer bestimmten Lage bezüglich der Airbagbaugruppe 26, also insbesondere bezüglich der Aufnahme 2 und des Lenkrades 24, positioniert und anschließend die Airbagbaugruppe 26 ausgelöst, so dass der Gassack 28 aufgeblasen wird und sich hierbei in Richtung auf die Testpuppe 5, genauer auf deren Oberkörper 50, einschließlich des Kopfbereiches 55, entfaltet. Hierzu sind die Aufnahmen 2, 3 der Airbagbaugruppe 26 und der Testpuppe 5 so ausgeführt, dass bei bestimmungsgemäßer Anordnung einerseits der Airbagbaugruppe 26 an der ersten Aufnahme 2 und andererseits der Testpuppe 5 an der zweiten Aufnahme 3 der sich beim Aufblasen entfaltende Gassack 28 genau auf solche Bereiche der Testpuppe 5 auftrifft, nämlich vorliegend auf deren Brustbereich 51 sowie deren Kopfbereich 55, auf die der Gassack einer entsprechenden Airbagbaugruppe - hier einem Fahrerairbagmodul - in einem Kraftfahrzeug bei einem bestimmungsgemäß auf einem Fahrzeugsitz befindlichen, zu schützenden Fahrzeuginsassen einwirken würde.

Eine Besonderheit der vorliegenden Testvorrichtung liegt dabei in der Anordnung und Fixierung der Testpuppe 5 an der zugeordneten zweiten Aufnahme 3. Gemäß Figur 1 ist die Testpuppe 5 in einem Teilbereich 52 an der Testvorrichtung angeordnet und fixiert, der im Ausführungsbeispiel den Beckenbereich eines Fahrzeuginsassen repräsentiert. Die Fixierung der Testpuppe 5 in einem Teilbereich 52 ist dabei derart, dass die Testpuppe 5 im fixierten Zustand in jenem Teilbereich 52 nicht senkrecht zu der xz-Ebene bewegbar bzw. verschiebbar ist, die durch die eine Fahrzeuglängsachse repräsentierende x-Achse und die eine vertikale Fahrzeugachse repräsentierende z-Achse aufgespannt wird.

Die Fixierung erfolgt im Ausführungsbeispiel der Figur 1 konkret dadurch, dass die Testpuppe 5 bezüglich einer Schwenkachse 30a verschwenkbar gelagert ist, die sich entlang der eine horizontale Fahrzeugquerachse repräsentierenden γ-Achse erstreckt. Die Schwenkachse 30a kann dabei insbesondere durch den sogenannten H-Punkt der Testpuppe 5 verlaufen.

Die Testpuppe 5 ist vorliegend nicht unmittelbar auf jener Achse 30a gelagert, sondern steht mit der Achse 30a vielmehr über ein Verbindungselement 35 in Form mindestens eines Hebels in Verbindung, das einerseits um die Achse 30a verschwenkbar ist und das andererseits an einer Fixierstelle 6 mit dem Teilbereich 52 der Testpuppe 5 (vorliegend starr aber ggf. auch flexibel oder gelenkig) verbunden ist. Dabei befindet sich vorliegend die Schwenkachse 30a bei bestimmungsgemäßer Ausrichtung der Testpuppe 5, so dass sie einen auf einem Fahrzeugsitz sitzenden Fahrzeuginsassen repräsentiert, in etwa vertikal unter der Fixierstelle 6.

Unterhalb der durch die Schwenkachse 30a, den Hebel 35 und die Fixierstelle 6 gebildeten Fixiereinrichtung liegt die Testpuppe 5 frei; d. h., sie weist unterhalb jener Fixiereinrichtung 6, 30a, 35 keine zusätzlichen Stützstellen auf, über die sie sich an zugeordneten Stützflächen der Testvorrichtung 1 abstützte.

Weiterhin sind Widerstandsmittel 37, 38, hier in Form eines über ein weiteres Verbindungselement 37 (Zusatzarm) mit dem ersten Verbindungselement 35 verbundenen Gewichtes 38, vorgesehen, die einer Schwenkbewegung S der Testpuppe 5 unter Einwirkung des sich entfaltenden Gassackes 28 entgegenwirken.

Diese Widerstandsmittel 37, 38 können genutzt werden, um vorgeschriebene Versuchsbedingungen bei der Belastung der Testpuppe 5 unter Einwirkung des Gassackes 28 einzustellen. Je größer das Widerstandsmoment ist, das einer Schwenkbewegung S der Testpuppe 5 unter Einwirkung des Gassackes 28 entgegenwirkt, desto größer deren Belastung; und jenes Widerstandsmoment ist z.B. durch Variation des Gewichtes 38 einstellbar. Alternativ können als Widerstandsmittel beispielsweise auch Reib- oder Klemmelemente verwendet werden, die einer Schwenkbewegung S der Testpuppe entgegenwirken.

Im fixierten Zustand der Testpuppe 5, wie in Figur 1 gezeigt, stellt eine Bewegung der Testpuppe in der xz-Ebene, also der durch die Fahrzeuglängsachse x und die vertikale Fahrzeugachse z aufgespannten Ebene, deren einzigen Bewegungsfreiheitsgrad dar, und zwar eine Bewegung in Form einer Schwenkbewegung S bezüglich der Schwenkachse 30a.

Dabei ist es allerdings durchaus möglich, dass die Testpuppe 5 vor einem Fixieren bezüglich der xz-Ebene noch entlang der Richtung der Schwenkachse 30a, also senkrecht zu jener xz-Ebene, verschiebbar ist, damit die Testpuppe 5 auch in jener Richtung y in unterschiedliche Positionen bezüglich der Airbagbaugruppe 26 bringbar ist. Bei der Untersuchung eines Fahrerairbagmodules an einem Lenkrad 24 erfolgt das Ausrichten der Testpuppe 5 vorzugsweise derart, dass die Mitte des Lenkradkranzes in der Symmetrieebene des Oberkörpers 50 der Testpuppe 5 liegt. Wird die Testpuppe 5 dann aber bezüglich der Schwenkachse 30a fixiert, dann verbleibt als einziger Bewegungsfreiheitsgrad die (Schwenk-)Bewegung in der xz-Ebene. (Vernachlässigt wird dabei, dass sich Körperteile (z.B. Extremitäten aber ggf. auch der Brustbereich) der Testpuppe 5, die beabstandet von der Schwenkachse 30a angeordnet sind, bedingt durch ihre gelenkige bzw. flexible Verbindung untereinander senkrecht zur xz-Ebene bewegen können. Die obige Fixierung gilt also streng genommen speziell für den Teilbereich 52 des Oberköpers 50 der Testpuppe 5, welcher das Becken eines Fahrzeuginsassen repräsentiert.)

Alternativ zu einer Verschiebbarkeit und anschließenden Fixierbarkeit der Testpuppe 5 auf der Schwenkachse 30a kann vorgesehen sein, die Aufnahme 3 für die Testpuppe 5 in ihrer Position verstellen zu können, insbesondere entlang aller Raumrichtungen x, y, z, wobei die Testpuppe 5 zur Vorjustierung mitgenommen wird.

Nach der Fixierung der Testpuppe 5 bezüglich der xz-Ebene genügt es somit zum Positionieren der Testpuppe 5 (vor einer Aktivierung der Airbagbaugruppe 26) die Testpuppe 5 durch Verschwenken so auszurichten, dass sie eine bestimmte, vorgebbare räumliche Orientierung (Neigung) einnimmt und damit insbesondere deren Brust- und Kopfbereich 55 einen definierten Abstand einerseits von der Airbagbaugruppe 26 (am Lenkrad 24) und andererseits von der eine Rückenlehne repräsentierenden Abfangeinrichtung 42 aufweisen. Hierdurch können gezielt sowohl normale Sitzpositionen als auch so genannte unübliche Sitzpositionen ("oop") repräsentiert werden, bei denen, wie z. B. in Figur 1 dargestellt, sich die Testpuppe mit ihrem Brust- und Kopfbereich 51, 55 ungewöhnlich nah bei dem Lenkrad 24 und der Airbagbaugruppe 26 befindet.

Vor dem Ausrichten der Testpuppe 5 können außerdem zunächst die Lage der Airbagbaugruppe 26 - durch Verstellen des Lenkrades 24 bezüglich des zugeordneten Gelenkes 20a - sowie die Lage der Abfangeinrichtung 42 - durch Verschwenken bezüglich der zugeordneten Schwenkachse 40a - eingestellt werden.

Wird anschließend zur Versuchsdurchführung die Airbagbaugruppe 26 aktiviert, so dass der Gassack 28 über eine Aufblaseinrichtung mit Gas befüllt wird und sich hierbei entfaltet, so wirkt er in definierter Weise - abhängig von der vorherigen Ausrichtung der Testpuppe 5 - auf deren Brust- und/oder Kopfbereich 51, 55 ein, woraufhin die Testpuppe 5 eine Schwenkbewegung S weg von der Airbagbaugruppe 26 ausführt (und gleichzeitig hin zu der Abfangeinrichtung 42, an welcher die Testpuppe 5 mit ihrem Rückenbereich abfangbar ist).

Die einfache (schwenkbare) Fixierung der Testpuppe 5 in einem Teilbereich 52, der den Beckenbereich eines Fahrzeuginsassen repräsentiert, ist dabei für eine wirklichkeitsnahe Untersuchung der an der Testpuppe 5 aufgrund der Einwirkung des Gassackes 28 auftretenden Belastungen deshalb ausreichend, weil die wesentlichen (kritischen) Belastungen bis etwa 50 ms (oder allenfalls 80 ms) nach Aktivierung der Airbagbaugruppe auftreten; also in einer Zeitspanne, in welcher der den Beckenbereich repräsentierende Teilbereich 52, selbst wenn er nicht an der Testvorrichtung fixiert wäre sondern vielmehr wie im Fall eines auf einem Fahrzeugsitz befindlichen Fahrzeuginsassen lediglich an einer Sitzfläche abgestützt wäre, keine substantiellen Bewegungen ausführen würde. Die Belastung der Testpuppe 5 unter Einwirkung des Gassackes 28 kann dabei in üblicher Weise mittels Sensoren und einer zugehörigen Auswerteelektronik bestimmt werden.

Um Mehrfachversuche unter identischen Bedingungen durchzuführen, genügt es vorliegend, die Testpuppe 5 jeweils durch Verschwenken bezüglich der Schwenkachse 30a so auszurichten, dass sie eine bestimmte, vorgegebene räumliche Orientierung (Neigung) und damit einen bestimmten, vorgegebenen Abstand (mit ihrem Brust- und Kopfbereich 51, 55) von der Airbagbaugruppe 26 aufweist. Dies ist ohne Schwierigkeiten möglich; gegebenenfalls kann hierzu ein Winkelmessgerät im Bereich der Schwenkachse 30a angeordnet sein, welches die jeweilige Schwenklage der Testpuppe 5 anzeigt. Die Ausrichtung der Testpuppe kann weiterhin beispielsweise mittels eines Lasermessgestells erfolgen, indem Sollpositionen von Referenzpunkten der Testpuppe angefahren und die Istpositionen dieser Punkte in Übereinstimmung mit der jeweils erzeugten Lasermarke gebracht werden.

Im Ergebnis können Versuchsreihen unter identischen sowie definiert abgewandelten Bedingungen durchgeführt werden, die ohne Weiteres reproduzierbar sind und die somit zuverlässige Aussagen darüber zulassen, welchen Insassenbelastungen - bei bestimmten Sitzpositionen eines jeweiligen Fahrzeuginsassen - den an der Testpuppe 5 bei Einwirkung des Gassackes 28 ermittelten Belastungen entsprechen.

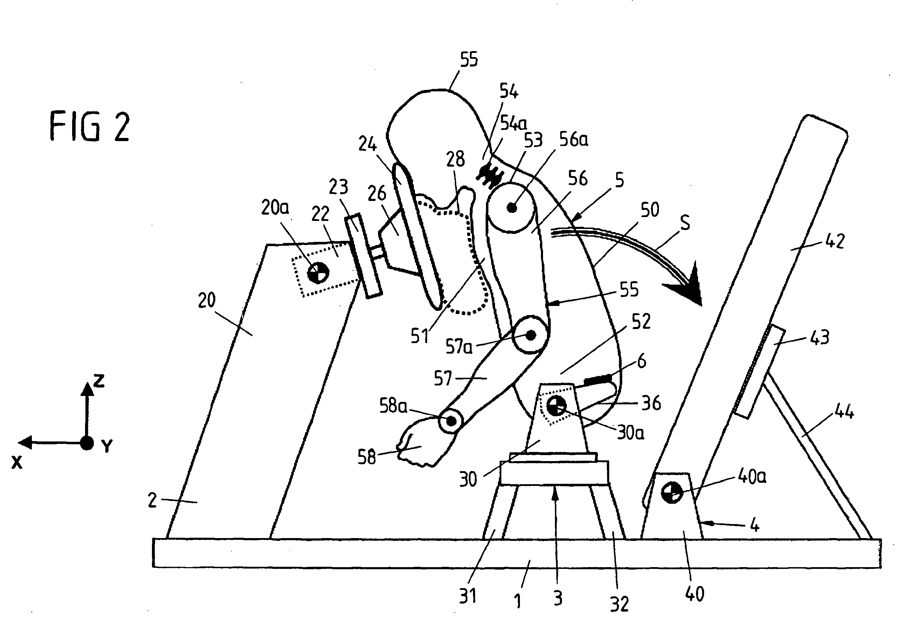

Figur 2 zeigt eine Abwandlung der Testvorrichtung aus Figur 1 hinsichtlich der Anordnung der Fixierstelle 6 an der Testpuppe 5 bezogen auf die Lage der Schwenkachse 30a. Gemäß Figur 2 ist das Verbindungselement 36 in Form eines Hebels, über das die Fixierstelle 6 an der Schwenkachse 30a angelenkt ist, so ausgebildet und angeordnet, dass die Fixierstelle 6 - entlang der vertikalen Fahrzeugachse z betrachtet - etwas oberhalb sowie - entlang der Fahrzeuglängsachse x betrachtet - etwas hinter der Schwenkachse 30a liegt, wenn die Testpuppe 5 in einer bestimmungsgemäßen Ausgangsposition, also mit im Wesentlichen aufrechtem bzw. nur leicht geneigtem Oberkörper, ausgerichtet worden ist.

Alternativ kann die Testpuppe 5 beispielsweise auch - ohne Verwendung eines zusätzlichen Hebelarms - unmittelbar auf der Schwenkachse 30a gelagert sein.

Die im Zusammenhang mit den Figuren 1 und 2 beschriebenen Anordnungen eignen sich vor allem als Testvorrichtungen zum Testen von Airbagbaugruppen, die in Fahrtrichtung vor einem Fahrzeuginsassen unterzubringen sind (Frontairbags). Bei einer entsprechenden Modifikation lassen sich die Testvorrichtungen aber auch zum Testen von Airbagbaugruppen verwenden, die für den Schutz der seitlichen Bereiche eines Fahrzeuginsassen vorgesehen sind (Seitenairbags). Die Schwenkachse 30a, bezüglich der die Testpuppe 5 verschwenkbar gelagert wird, verläuft in einem solchen Anwendungsfall entlang der x-Achse, welche die Fahrzeuglängsachse repräsentiert.

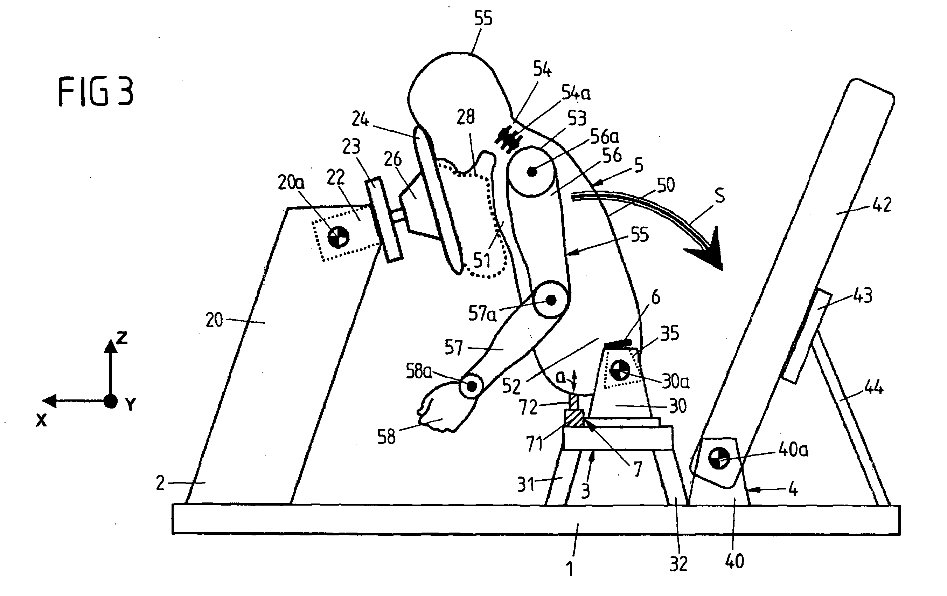

In Figur 3 ist eine Abwandlung der Testvorrichtungen aus den Figuren 1 und 2 dargestellt, gemäß der an der Testvorrichtung, genauer an der Aufnahme 3 für die Testpuppe 5, ein zusätzliches Stützelement 7 vorgesehen ist, an dem sich die Testpuppe 5 - beabstandet von ihrer Fixierstelle 6 - abstützen kann, und zwar unterhalb (und im Ausführungsbeispiel entlang der x-Achse vor) ihrer Fixierstelle 6. Hiermit wird erreicht, dass die Testpuppe 5 eine definierte, vorgebbare (Schwenk-)Lage einnimmt, bevor der Gassack 28 durch Aktivierung der Airbagbaugruppe 26 auf die Testpuppe 5 einwirkt.

Insbesondere kann erreicht werden, dass die Testpuppe 5 in einer definierten Lage (Neigung) bezüglich des Lenkrades 24 gehalten wird, an dem die Airbagbaugruppe 26 vorgesehen ist. So lässt sich vermeiden, dass die Testpuppe 5 in ihrer Ausgangslage mit einer zu starken Kraft auf das Lenkrad 24 einwirkt, was einer üblichen oop-Position eines Fahrzeuginsassen in einem Kraftfahrzeug widerspräche. Beispielweise kann die Ausgangslage der Testpuppe 5 gezielt so gewählt und eingestellt werden, dass die Testpuppe 5 mit Ihrem Kopf 55 gerade leicht am Lenkrad 24 anliegt.

Das Stützelement 7 kann einstellbar ausgebildet sein, zum Beispiel indem es aus zwei zueinander bewegbaren Komponenten 71, 72 besteht, die mittels einer Einstellschraube, eines Einstellbolzens oder dergleichen in unterschiedliche Relativpositionen zueinander bringbar sind. So kann es sich bei der einen Komponente 71 um eine Innengewinde tragende Hülse und bei der anderen Komponenten 72 um einen hierin geführten Gewindebolzen handeln. Hierdurch kann das Stützelement 7 entlang einer Achsrichtung a einstellbar sein.

Im Ergebnis lässt sich die Testpuppe 5 mit dem (einstellbaren) Stützelement 7 vor dem Einwirken des Gassackes 28 in unterschiedlichen vorgebbaren Lagen (bezüglich der Airbagbaugruppe 26) positionieren.

## Patentansprüche

1. Testvorrichtung zum Testen einer Airbagbaugruppe mit
- einer ersten Aufnahme (2) zum Aufnehmen einer Airbagbaugruppe (26), welche einen aufblasbaren Gassack (28) aufweist,
- einer zweiten Aufnahme (3) zum Aufnehmen einer Testpuppe (5), auf die der Gassack (28) beim Aufblasen einwirkt, und
- Mitteln (6, 30, 30a, 35, 36) zum Positionieren der Testpuppe (5) an der zweiten Aufnahme (3),
wobei die Positioniermittel (6, 30, 30a, 35, 36) eine Fixiereinrichtung (6, 30a, 35, 36) umfassen, mit der die Testpuppe (5) in einem Teilbereich (52) derart an der Testvorrichtung fixierbar ist, dass die Testpuppe (5) in diesem Teilbereich (52) bei Einwirkung des Gassackes (28) entlang mindestens einer Raumrichtung (y) örtlich fixiert bleibt; und wobei die Positioniermittel (6, 30, 30a, 35, 36) eine Schwenkachse (30a) definieren, bezüglich der die Testpuppe (5) schwenkbar gelagert ist,
derart und **dadurch gekennzeichnet, dass**
die Testpuppe (5) bei einer Einwirkung des Gassackes (28) auf deren Brust- und/oder Kopfbereich (51, 55) eine Schwenkbewegung (S) weg von der Airbagbaugruppe (26) ausführt.

2. Testvorrichtung nach Anspruch 1, **dadurch gekennzeichnet, dass** die Testpuppe (5) im fixierten Zustand unterhalb des fixierten Teilbereiches (52) keine zusätzliche Abstützung aufweist, über die sich die Testpuppe (5) abstützt, während sie sich unter der Einwirkung des Gassackes (28) bewegt.

3. Testvorrichtung nach Anspruch 1 oder 2, **dadurch gekennzeichnet, dass** der fixierte Teilbereich (52) in einem Bereich der Testpuppe (5) liegt, der das Becken eines Fahrzeuginsassen repräsentiert.

4. Testvorrichtung nach einem der vorhergehenden Ansprüche, **dadurch gekennzeichnet, dass** die Testpuppe (5) im Bereich des H-Punktes fixiert ist.

5. Testvorrichtung nach einem der vorhergehenden Ansprüche, **gekennzeichnet durch** eine derartige Fixierung der Testpuppe (5) in einem Teilbereich (52), dass hierdurch eine Fixierebene (xz-Ebene) definiert ist, senkrecht zu der der Teilbereich (52) der Testpuppe (5) im fixierten Zustand nicht verschiebbar ist.

6. Testvorrichtung nach einem der vorhergehenden Ansprüche, **gekennzeichnet durch** eine derartige Fixierung der Testpuppe (5) in einen Teilbereich (52), dass die Testpuppe (5) bei Einwirkung des Gassackes (28) entlang mindestens einer Raumrichtung (x, z) bewegbar ist.

7. Testvorrichtung nach einem der vorhergehenden Ansprüche, **dadurch gekennzeichnet, dass** die Schwenkachse (30a) entlang der Raumrichtung (y) verläuft, entlang der die Testpuppe (5) fixiert ist.

8. Testvorrichtung nach einem der vorhergehenden Ansprüche, **dadurch gekennzeichnet, dass** sich die Testpuppe (5) im fixierten Zustand unterhalb des fixierten Teilbereiches (52) an einem Stützelement (7) der Testvorrichtung abstützt, so dass die Testpuppe (5) in einer definierten Lage für eine Einwirkung des Gassackes (28) bereit gehalten wird.

9. Testvorrichtung nach Anspruch 8, **dadurch gekennzeichnet, dass** das Stützelement (7) einstellbar ist, um die Lage variieren zu können, in der die Testpuppe (5) durch das Stützelement (7) gehalten wird.

10. Testvorrichtung nach einem der vorhergehenden Ansprüche, **dadurch gekennzeichnet, dass** die Testpuppe (5) zumindest Bereiche (51, 52, 55) umfasst, die die Brust, das Becken und den Kopf eines Fahrzeuginsassen repräsentieren.

11. Testvorrichtung nach einem der vorhergehenden Ansprüche, **dadurch gekennzeichnet, dass** die erste Aufnahme (2) ausgebildet ist zur Aufnahme eines Lenkrades (24), an dem die zu testende Airbagbaugruppe (26) angeordnet ist.

12. Testvorrichtung nach einem der vorhergehenden Ansprüche, **dadurch gekennzeichnet, dass** die Testpuppe (5) so an der zweiten Aufnahme (3) fixierbar ist, dass hierdurch ein auf einem Fahrzeugsitz sitzender Fahrzeuginsasse repräsentiert wird.

13. Testvorrichtung nach einem der vorhergehenden Ansprüche, **dadurch gekennzeichnet, dass** die Testvorrichtung eine Abfangeinrichtung (42) aufweist, die die Rückenlehne eines Fahrzeugsitzes repräsentiert und mit der eine sich unter Einwirkung des Gassackes (28) bewegende Testpuppe (5) abfangbar ist.

## Claims

1. Testing device for testing an airbag assembly, with
- a first receptacle (2) for receiving an airbag assembly (26) which has an inflatable airbag (28),
- a second receptacle (3) for receiving a test dummy (5) on which the airbag (28) acts upon inflation, and
- means (6, 30, 30a, 35, 36) for positioning the test dummy (5) on the second receptacle (3),
wherein the positioning means (6, 30, 30a, 35, 36) comprise a fixing device (6, 30a, 35, 36) with which the test dummy (5) is fixable in a subregion (52) to the testing device in such a manner that the test dummy (5) remains locally fixed in said subregion (52) upon action of the airbag (28) in at least one direction in space (y); and wherein the positioning means (6, 30, 30a, 35, 36) define a pivot axis (30a) with respect to which the test dummy (5) is pivotably mounted **in such a manner and characterized in that,** upon action of the airbag (28) on the chest and/or head region (51, 55) of the test dummy (5), the latter executes a pivoting movement (S) away from the airbag assembly (26).

2. Testing device according to Claim 1, **characterized in that** the test dummy (5) in the fixed state below the fixed subregion (52) does not have any additional support via which the test dummy (5) is supported while the latter moves under the action of the airbag (28).

3. Testing device according to Claim 1 or 2, **characterized in that** the fixed subregion (52) is located in a region of the test dummy (5) that represents the pelvis of a vehicle occupant.

4. Testing device according to one of the preceding claims, **characterized in that** the test dummy (5) is fixed in the region of the H-point.

5. Testing device according to one of the preceding claims, **characterized by** such a fixing of the test dummy (5) in a subregion (52) that a fixing plane (xz plane) is thereby defined, perpendicular to which the subregion (52) of the test dummy (5) is not displaceable in the fixed state.

6. Testing device according to one of the preceding claims, **characterized by** such a fixing of the test dummy (5) in a subregion (52) that the test dummy (5) is movable upon action of the airbag (28) in at least one direction in space (x, z).

7. Testing device according to one of the preceding claims, **characterized in that** the pivot axis (30a) runs in the direction in space (y) in which the test dummy (5) is fixed.

8. Testing device according to one of the preceding claims, **characterized in that** the test dummy (5) in the fixed state is supported below the fixed subregion (52) on a supporting element (7) of the testing device such that the test dummy (5) is kept ready in a defined position for an action of the airbag (28).

9. Testing device according to Claim 8, **characterized in that** the supporting element (7) is adjustable in order to be able to vary the position in which the test dummy (5) is held by the supporting element (7).

10. Testing device according to one of the preceding claims, **characterized in that** the test dummy (5) comprises at least regions (51, 52, 55) which represent the chest, the pelvis and the head of a vehicle occupant.

11. Testing device according to one of the preceding claims, **characterized in that** the first receptacle (2) is designed for receiving a steering wheel (24) on which the airbag assembly (26) to be tested is arranged.

12. Testing device according to one of the preceding claims, **characterized in that** the test dummy (5) is fixable to the second receptacle (3) in such a manner that a vehicle occupant sitting on a vehicle seat is thereby represented.

13. Testing device according to one of the preceding claims, **characterized in that** the testing device has a intercepting device (42) which represents the backrest of a vehicle seat and with which a test dummy (5) moving under the action of the airbag (28) can be intercepted.

## Revendications

1. Dispositif de test destiné à tester un module d'airbag comprenant
- un premier logement (2) pour recevoir un module d'airbag (26) qui présente un sac de gaz gonflable (28),
- un deuxième logement (3) pour recevoir un mannequin de test (5) sur lequel agit le sac de gaz (28) lors de son gonflage, et
- des moyens (6, 30, 30a, 35, 36) pour le positionnement du mannequin de test (5) sur le deuxième logement (3),
les moyens de positionnement (6, 30, 30a, 35, 36) comprenant un dispositif de fixation (6, 30a, 35, 36) avec lequel le mannequin de test (5) peut être fixé dans une région partielle (52) sur le dispositif de test, de telle sorte que le mannequin de test (5) reste fixé localement dans cette région partielle (52) lorsque le sac de gaz (28) agit sur lui le long d'au moins une direction spatiale (y) ; et les moyens de positionnement (6, 30, 30a, 35, 36) définissant un axe de pivotement (30a) par rapport auquel le mannequin de test (5) est monté de manière pivotante,
de telle sorte que et **caractérisé en ce que** le mannequin de test (5), lorsque le sac de gaz (28) agit sur sa région de torse et/ou de tête (51, 55), effectue un mouvement de pivotement (S) à l'écart du module d'airbag (26).

2. Dispositif de test selon la revendication 1, **caractérisé en ce que** le mannequin de test (5), dans l'état fixé sous la région partielle fixée (52), ne présente aucun support supplémentaire par le biais duquel le mannequin de test (5) s'appuie pendant qu'il se déplace sous l'action du sac de gaz (28).

3. Dispositif de test selon la revendication 1 ou 2, **caractérisé en ce que** la région partielle fixée (52) est située dans une région du mannequin de test (5) qui représente le bassin d'un occupant du véhicule.

4. Dispositif de test selon l'une quelconque des revendications précédentes, **caractérisé en ce que** le mannequin de test (5) est fixé dans la région du point H.

5. Dispositif de test selon l'une quelconque des revendications précédentes, **caractérisé par** une fixation du mannequin de test (5) dans une région partielle (52), de telle sorte que par ce biais, un plan de fixation (plan xz) soit défini, perpendiculairement auquel la région partielle (52) du mannequin de test (5) ne peut pas se déplacer dans l'état fixé.

6. Dispositif de test selon l'une quelconque des revendications précédentes, **caractérisé par** une fixation du mannequin de test (5) dans une région partielle (52), de telle sorte que le mannequin de test (5) puisse se déplacer lors de l'action du sac de gaz (28) le long d'au moins une direction spatiale (x, z).

7. Dispositif de test selon l'une quelconque des revendications précédentes, **caractérisé en ce que** l'axe de pivotement (30a) s'étend le long de la direction spatiale (y) le long de laquelle est fixé le mannequin de test (5).

8. Dispositif de test selon l'une quelconque des revendications précédentes, **caractérisé en ce que** le mannequin de test (5), dans l'état fixé, s'appuie en dessous de la région partielle fixée (52) sur un élément de support (7) du dispositif de test, de telle sorte que le mannequin de test (5) soit déjà maintenu dans une position définie pour permettre l'action du sac de gaz (28).

9. Dispositif de test selon la revendication 8, **caractérisé en ce que** l'élément de support (7) peut être ajusté afin de pouvoir faire varier la position dans laquelle le mannequin de test (5) est maintenu par l'élément de support (7).

10. Dispositif de test selon l'une quelconque des revendications précédentes, **caractérisé en ce que** le mannequin de test (5) comprend au moins des régions (51, 52, 55) qui représentent le torse, le bassin et la tête d'un occupant du véhicule.

11. Dispositif de test selon l'une quelconque des revendications précédentes, **caractérisé en ce que** le premier logement (2) est réalisé pour recevoir un volant de direction (24), sur lequel est disposé le module d'airbag à tester (26).

12. Dispositif de test selon l'une quelconque des revendications précédentes, **caractérisé en ce que** le mannequin de test (5) peut être fixé au niveau du deuxième logement (3), de telle sorte qu'il représente de ce fait un occupant du véhicule assis sur un siège du véhicule.

13. Dispositif de test selon l'une quelconque des revendications précédentes, **caractérisé en ce que** le dispositif de test présente un dispositif de réception (42) qui représente le dossier d'un siège de véhicule et avec lequel un mannequin de test (5) se déplaçant sous l'action du sac de gaz (28) peut être reçu.
